# EUROPEAN PATENT APPLICATION

(11) **EP 3 557 026 A1**
(43) Date of publication of application: **23.10.2019**
(21) Application number: 19164355.0
(22) Date of filing: 21.03.2019
(51) Int. Cl.: F02C 6/08, F02C 7/18, F02C 7/32, F02C 9/18, F02K 3/115

(54) **GAS TURBINE ENGINE**

(30) Priority: 20.04.2018 GB 201806461
(71) Applicant: Rolls-Royce plc, London SW1E 6AT (GB)
(72) Inventor: Scothern, David, Derby, Derbyshire DE24 8BJ (GB)
(74) Representative: Rolls-Royce plc

(57) **Abstract**

A gas turbine engine for an aircraft, comprising: an engine core; a covering configured to cover at least part of the engine core; and an engine accessory that interacts with the engine core or a component of the engine core; wherein the engine accessory is outside the covering.

## Description

The present disclosure relates to gas turbine engines, in particular gas turbine engines comprising an engine accessory that interacts with an engine core or a component of the engine core.

Gas turbine engines are typically provided with coverings, also known as casings or core fairings, around the engine core to improve the aerodynamic profile of the engine core within the engine structure. The core fairings are typically non-structural and may be opened to provide access to units mounted on the core structure. It would be advantageous to make the core fairings structural to stiffen and support the engine core, but this is difficult to achieve if the core fairings are designed to be opened regularly.

According to a first aspect there is provided a gas turbine engine for an aircraft, comprising; an engine core; a covering configured to cover at least part of the engine core; and an engine accessory that interacts with the engine core or a component of the engine core; wherein the engine accessory is outside the covering.

Optionally, the covering further comprises a socket. The engine accessory may be removably connected to the socket.

Optionally, the gas turbine engine further comprises an interface connecting the engine accessory to the engine core or the component of the engine core.

Optionally the interface comprises the socket.

Optionally, the interface comprises a conduit that provides a fluid connection from the engine accessory to the engine core or the component of the engine core.

Optionally, the interface comprises an electrical connection from the engine accessory to the engine core or the component of the engine core.

Optionally, the interface comprises an connecting member that provides an actuating mechanism between the engine accessory to the engine core or the component of the engine core.

Optionally, the engine accessory is detachable from the interface.

Optionally, the engine accessory is disposed on the covering such that the engine accessory and the covering form a continuous surface.

Optionally, the engine accessory is disposed on the covering such that at least part of the engine accessory extends into an airflow around the engine core.

Optionally the engine accessory is configured to transfer heat generated by the engine core, the component of the engine core and the engine accessory to the part of the engine accessory that forms the continuous surface or that extends into an airflow around the engine core.

Optionally, the covering further comprises a channel connecting the engine accessory to the engine core. The engine accessory may be configured to drain into the channel.

Optionally, the engine accessory may be attached to the covering. The engine accessory may be supported by the covering.

Optionally, the covering structurally supports the engine core.

Optionally, the gas turbine engine further comprises a fan located upstream of the engine core. The fan may be configured to generate a bypass airflow external to the engine core.

Optionally, the engine core further comprises a turbine, a compressor, and a core shaft connecting the turbine to the compressor. The fan may further comprise a plurality of fan blades. The gas turbine engine may further comprise a gearbox that receives an input from the core shaft and outputs drive to the fan so as to drive the fan at a lower rotational speed than the core shaft.

Optionally, the turbine is a first turbine, the compressor is a first compressor, and the core shaft is a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

According a second aspect there is provided a method of assembling a gas turbine engine of any preceding claim, the method comprising: assembling the engine core; attaching the covering to the engine core; and attaching the engine accessory to the covering.

According a thirds aspect there is provided a method of maintaining a gas turbine engine, the method comprising: detaching the engine accessory from the covering; performing maintenance on the engine accessory or providing a replacement engine accessory; and attaching the engine accessory or replacement engine accessory to the covering.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²) . The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of an engine accessory located within a gas turbine engine;
Figure 5 is a sectional side view of an alternative arrangement of an engine accessory located within a gas turbine engine;

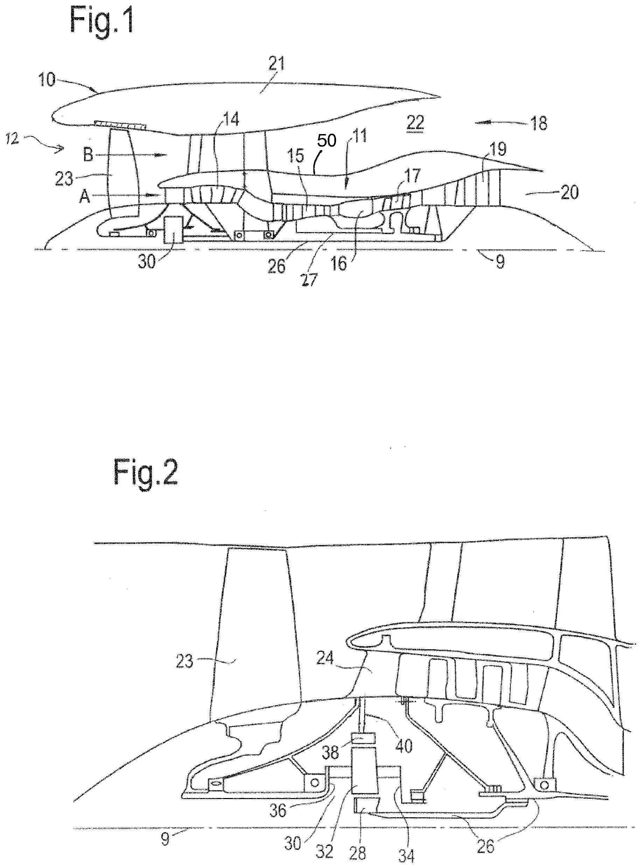

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

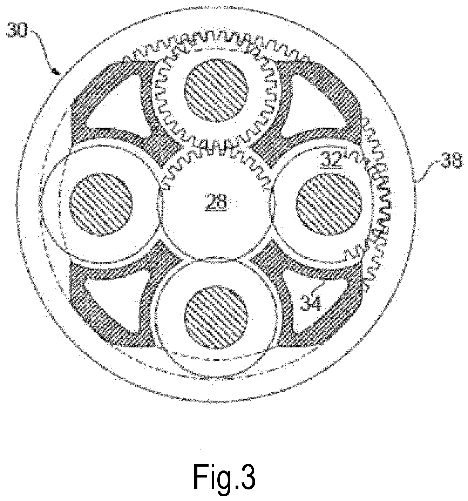

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or a turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In the present disclosure, the engine core 11 is covered by a covering 50. The covering 50 is configured to cover at least part of the engine core 11. The covering 50 may also be referred to as a core fairing or as a casing of the engine core 11. The covering 50 being configured to cover at least part of the engine core 11 means that the core faring divides the engine core 11 from the airflow flowing around the engine core 11. The covering 50 may also be considered to define a surface of the bypass duct 22. The covering 50 may have an improved aerodynamic profile relative to the aerodynamic profile of the section of the engine core 11 that is covered by the covering 50.

The gas turbine engines 10 further comprises an engine accessory 60 that interacts with the engine core 11 or a component of the engine core. Examples of an engine accessory 60 include an engine controller or a device or regulator that controls other components of the engine core 11, a turbine case cooling system that takes cold air in through inlets in the covering 50 and ducts it to the turbine section, air to fluid coolers, oil pumps or fuel pumps, and components of the cabin bleed system such as regulating valves and bypass heat exchangers. However, the engine accessory 60 is not limited to these examples and any device which performs a function related to operation of the engine core 11 may be considered an engine accessory 60.

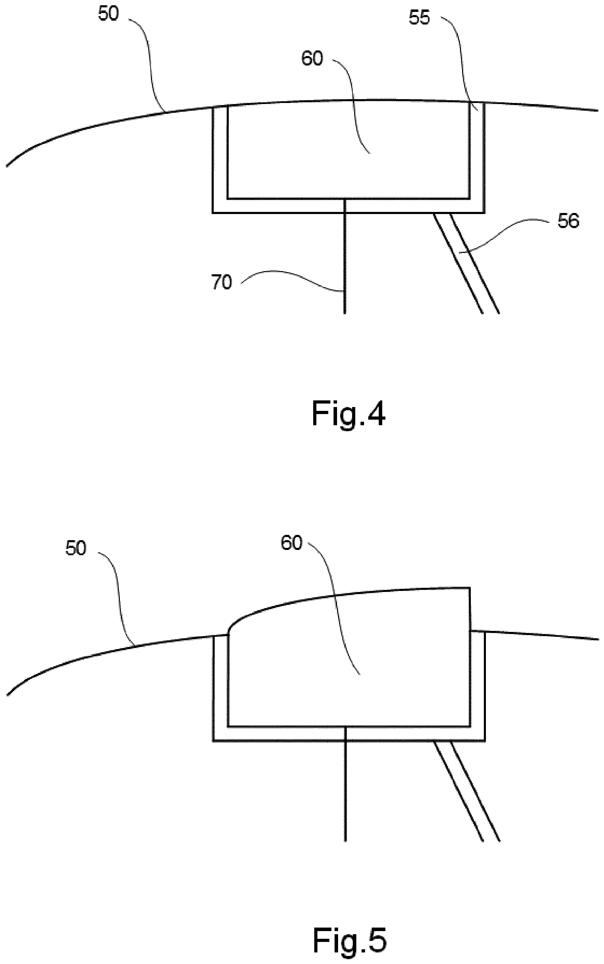

As shown in Figure 4, the engine accessory 60 is arranged outside the covering 50. This means that the engine accessory 60 is arranged further from the engine core 11 than the covering in a direction outwards from the engine core 11 at the point where the engine accessory 60 is disposed on the covering 50. The outside of the covering 50 may be considered to be the area on the far side of the covering 50 from the engine core 11 in a direction outwards from the engine core 11. The outside of the covering 50 may also be the volume defined by the bypass duct 22.

Arranging a gas turbine engine as in the present disclosure may lead to a number of advantages. Maintenance of the engine accessories 60 may be made easier as the engine accessories may be accessed from outside of the engine. Maintenance of the engine accessory 60 may also be performed without requiring the covering 50 to be moved or for access to be provided through the covering 50.

An opening or hole may be provided in the covering 50 at a point in the covering 50 where the engine accessory 60 is disposed. The opening or hole may expose the engine core 11 to the outside of the covering 50 when the engine accessory 60 is removed from the covering 50.

The covering 50 may further comprise a socket 55. The engine accessory 60 may be removably connected to the socket 55. The engine accessory 60 may be mounted into the socket 55 from the outside of the covering 50. When inserted into the socket 55, the engine accessory 50 may interface or connect with the socket using face seals and/or wiring connectors.

The gas turbine engine 10 may further comprise an interface 70 connecting the engine accessory 60 to the engine core 11 or a component of the engine core. The socket 55 may be part of the interface 70, or the socket 55 may be a separate component connected to the interface 70 in an appropriate manner. The interface 70 may provide a fluid connection, an electrical connection, an actuating mechanism or any other physical connection between the engine accessory 60 and the engine core 11 or the component of the engine core. The interface 70 may comprise a conduit suitable for transmitting fluid, an electrical connection suitable for transmitting electrical signals or a connecting member suitable for transmitting physical motion. However, the interface 70 is not limited to any of these components or connection methods and any method for and/or connection capable of transmitting information from the engine core 11 or component of the engine core to the engine accessory 60 may be considered an interface 11.

The engine accessory 60 may be detachable from the interface 70. To facilitate this, a suitable connection may be made between the interface 70 and the engine accessory 60 depending on the form of the interface. For example, where the interface is a conduit providing a fluid connection, a valve may be a suitable connection. In the case of a connecting member providing an actuating mechanism, a latch, clasp, screw or any other suitable connection that allows the engine accessory 60 to be detached from the interface to be used.

The engine accessory 60 may be disposed on the covering 50 such that the engine accessory 60 and the covering 50 form a continuous or substantially continuous surface. Such an arrangement of the engine accessory 60 and the covering 50 is shown in Figure 4. The substantially continuous surface may form a section of the surface that defines the bypass duct 22. Small gaps may be present in the surface formed by the engine accessory 60 and the covering 50, for example to allow for tools to insert or remove the engine accessory 60 from the covering 50. The continuous or substantially continuous surface formed by the engine accessory 60 and the covering 50 may have an improved aerodynamic profile relative to the aerodynamic profile of the section of the engine core 11 covered by the covering 50. The aerodynamic profile of the continuous or substantially continuous surface formed by the engine accessory 60 and the covering 50 may have an equivalent or improved aerodynamic profile compared to the other sections of the covering 50.

In an alternative arrangement, the engine accessory 60 may be disposed on the covering 50 such that at least part of the engine accessory 60 extends into the airflow around the engine core 11 or the bypass airflow 22. An example of this arrangement is shown in Figure 5. In this arrangement, the engine accessory 60 extends further outward in a direction away from engine core 11 when compared to the surface of the covering 50 in the area surrounding the engine accessory 60. In this arrangement, at least a partial cross-section of the engine accessory 60 is exposed to the bypass airflow in the bypass duct 22.

The engine accessory 60 may be configured to transfer heat generated by the engine core 11, the component of the engine core and/or the engine accessory 60 to the part or section of the engine accessory 60 that extends into the airflow around the engine core 11 or the bypass airflow. For example, the engine accessory 60 may comprise a heat sink that at least partially extends into the airflow around the engine core 11 or the bypass duct 22. At least one of the external surfaces of the engine accessory 60 may be provided with acoustic liners and/or further cooling features that encourage the transfer of heat into the bypass duct. The internal structure of the engine accessory 60 may also be arranged to transfer or direct heat towards to the surface of the engine accessory 60 in contact with or extending into the airflow around the engine core 11 or the bypass duct 22. For example, the engine accessory 60 may comprise heat sinks or heat exchangers to transfer heat in this way.

Reliability of the engine accessory 60 may be improved if the engine accessory is arranged in such a way that the engine accessory 60 is cooled by the airflow around the engine core 11 or the bypass flow.

The covering 50 may further comprise a channel 56 connecting the engine accessory 60 to the engine core 11. The channel 56 may provide a fluid connection between the engine accessory 60 and the engine core 11. The engine accessory 60 may be configured to drain into the channel 56. Leakage from the engine accessory 60 may thereby be directed into the engine core 11 and not into the bypass duct 22. The angle and/or location of the channel 56 may be arranged to facilitate the drainage from the engine accessory 60 into the channel.

The engine accessory 60 may be attached to or mounted on the covering 50. The engine accessory 60 may be supported by the covering 50. By supporting the engine accessory 60, the covering 50 may bear the weight or structural load of the engine accessory 60. The covering 50 may prevent motion of the engine accessory 60 relative to any one of the covering 50, the engine core 11 or the gas turbine engine 10. The engine accessory 60 may be attached to the covering by at least one of a latch, clasp, screw or any other suitable attachment method.

The covering 50 may structurally support the engine core 11. For example, the covering 50 may prevent flexing of the core structure, particularly during operation of the gas turbine engine 10. The covering 50 may carry at least part of the load from the engine core 11. For example, the stiffness or thickness of the covering may be substantially more than structures typically applied to sections of the gas turbine engine 10 to improve the aerodynamic profile of the gas turbine engine 10. The covering 50 may prevent high levels of relative movement between the covering 50 and the engine core 11 during operation of the gas turbine engine 10.

The gas turbine engine 10 may comprising a plurality of coverings 50. The plurality of coverings 50 may be integrated into a single structure. The gas turbine engine 10 may comprise a plurality of engine accessories 60. A plurality of engine accessories 60 may be disposed on an individual covering 50. The plurality of engine accessories 60 may be disposed at the same location on the covering 50, or at least one of the plurality of engine accessories 60 may be disposed at a different location on the covering 50.

Each of the plurality of engine accessories 60 may be provided with any one of an interface 70, a socket 55 and a channel 56 as described above. Alternatively, more than one engine accessory 60 may share an interface 70, a socket 55 and/or a channel 56. Further conduits, electrical connections or connecting members may provide at least one of a fluid connection, an electrical connection or an actuating mechanism between at least two of the plurality of engine accessories 60.

The gas turbine engine 10 of the present disclosure may be assembled by assembling the engine core 11, attaching the covering 50 to the engine core 11 and attaching the engine accessory 60 to the covering 50. Alternatively, the engine accessory 60 may be attached to the covering 50 before attaching the covering 50 to the engine core 11.

The gas turbine engine 10 of the present disclosure may be maintained by detaching the engine accessory 60 from the covering 50, performing maintenance on the engine accessory 10 or providing or obtaining a replacement engine accessory and attaching the engine accessory 10 or replacement engine accessory to the covering 50. In this method of maintaining the gas turbine engine 10, the covering 50 does not have to be adjusted or removed to perform maintenance of the engine accessory 60, and maintenance of the gas turbine engine 10. In the case where the covering further comprises a hole or opening provided at the location where the engine accessory 10 is disposed, removal of the engine accessory 60 may allow maintenance to be performed on the engine core 11 through the hole or opening without the covering 50 being removed.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) for an aircraft, comprising;
an engine core (11);
a covering (50) configured to cover at least part of the engine core (11); and an engine accessory (60) that interacts with the engine core (11) or a component of the engine core; wherein
the engine accessory (60) is disposed on the outside of the covering (50).

2. The gas turbine engine (10) of claim 1, wherein
the covering (50) further comprises a socket (55); and
the engine accessory (60) is removably connected to the socket (55).

3. The gas turbine engine (10) of claim 1 or 2, wherein
the gas turbine engine (10) further comprises an interface (70) connecting the engine accessory (60) to the engine core (11) or the component of the engine core.

4. The gas turbine engine (10) of claim 3, wherein
the interface (70) comprises an electrical connection from the engine accessory (60) to the engine core (11) or the component of the engine core.

5. The gas turbine engine (10) of claim 3 or claim 4, wherein
the interface (70) comprises an connecting member that provides an actuating mechanism between the engine accessory (60) to the engine core (11) or the component of the engine core.

6. The gas turbine engine (10) of any preceding claim, wherein
the engine accessory (60) is disposed on the covering (50) such that at least part of the engine accessory (60) extends into an airflow around the engine core (11).

7. The gas turbine engine (10) of claim 6, wherein the engine accessory (60) is configured to transfer heat generated by the engine core (11), the component of the engine core and the engine accessory (60) to the part of the engine accessory (60) that forms the continuous surface or that extends into an airflow around the engine core (11).

8. The gas turbine engine (10) of any preceding claim, wherein
the covering (50) further comprises a channel (56) connecting the engine accessory (60) to the engine core (11); and
the engine accessory (60) is configured to drain into the channel (56).

9. The gas turbine engine (10) of any preceding claim, wherein
the engine accessory (60) is attached to and supported by the covering (50).

10. The gas turbine engine (10) of any preceding claim, wherein
the covering (50) structurally supports the engine core (11).

11. The gas turbine engine (10) of any preceding claim, further comprising:
a fan (23) located upstream of the engine core (11), the fan (23) configured to generate a bypass airflow external to the engine core (11);

12. The gas turbine engine (10) of claim 11, wherein:
the engine core (11) further comprises a turbine (19), a compressor (14), and a core shaft (26) connecting the turbine to the compressor;
the fan (23) further comprises a plurality of fan blades; and
the gas turbine engine (10) further comprises:
a gearbox (30) that receives an input from the core shaft (26) and outputs drive to the fan so as to drive the fan at a lower rotational speed than the core shaft.

13. The gas turbine engine (10) according to claim 12, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

14. A method of assembling the gas turbine engine (10) of any preceding claim, the method comprising:
assembling the engine core (11);
attaching the covering (50) to the engine core (11); and
attaching the engine accessory (60) to the covering (50).

15. A method of maintaining the gas turbine engine (10) of any one of claims 1 to 13, the method comprising:
detaching the engine accessory (60) from the covering (50);
performing maintenance on the engine accessory (10) or providing a replacement engine accessory; and
attaching the engine accessory (10) or replacement engine accessory to the covering (50).
